# EUROPÄISCHE PATENTSCHRIFT

(11) **EP 1 513 736 B1**
(45) Veröffentlichungstag und Bekanntmachung des Hinweises auf die Patenterteilung: **02.08.2006**
(21) Anmeldenummer: 03760554.0
(22) Anmeldetag: 05.06.2003
(51) Int. Cl.: B65D 51/00, B65D 39/00

(54) **VERSCHLUSSDECKEL**
CLOSING LID
BOUCHON D'OBTURATION

(30) Priorität: 19.06.2002 DE 20209514 U
(43) Veröffentlichungstag der Anmeldung: 16.03.2005
(73) Patentinhaber: TRW Automotive Electronics & Components GmbH & Co. KG, 78315 Radolfzell (DE)
(72) Erfinder: KRAUS, Willi, 67269 Grünstadt (DE)
(74) Vertreter: Eder, Thomas
(86) Internationale Anmeldenummer: PCT/DE2003/001860
(87) Internationale Veröffentlichungsnummer: WO 2004/000677

(56) Entgegenhaltungen:
- US-A- 3 430 777
- US-A- 4 176 755
- US-A- 4 801 040
- US-A- 5 868 273

## Beschreibung

Die Erfindung bezieht sich auf einen Verschlussdeckel aus Kunststoff, insbesondere zum dichten Verschließen einer Öffnung in einer Trägerplatte, insbesondere einer Kraftfahrzeugkarosserie, mit einem Deckelteil und einem Abdichtteil.

Als Stand der Technik ist bereits ein Verschlussdeckel zum dichten Abschluss einer Öffnung in einer Trägerplatte bekannt (DE 43 27 945 A1). Dieser Verschlussdeckel besteht aus einem Kunststoffdeckelteil und einem damit verbundenen Abdichtteil. Es sind zwei Komponenten vorgesehen, mit einer Kernkomponente aus einem harten Material und einer Schalenkomponente aus einem weicheren, die Kernkomponente umschließenden Material, welches an den Außenrändem mit der Trägerplatte verklebbar ist. Diese Verklebung kann bei manchen Anwendungsbereichen umständlich durchführbar sein, so dass die Aufgabe der vorliegenden Erfindung darin besteht, einen Verschlussdeckel der eingangs genannten Art derart auszubilden, dass bei einfacher Montage ohne äußeren Aufwand über den Verschlussdeckel ein dichter Abschluss der zu verschließenden Öffnung einer Trägerplatte gewährleistet ist.

Diese Aufgabe wird erfindungsgemäß dadurch gelöst, dass das aus einem elastischen Material bestehende Abdichtteil über Eingriffselemente mit Gegeneingriffselementen des aus einer Hartkomponente bestehenden Deckelteils verbunden ist und dass das Abdichtteil einen Anlageflansch und, diesem im Abstand gegenüberliegend, mindestens eine elastische Dichtlippe aufweist.

Das elastische Abdichtteil wird damit auf einfache Weise in dem aus einer Hartkomponente bestehenden Deckelteil eingesetzt, wonach die gesamte Einheit sofort zur Montage in einer Öffnung eines Deckelteils eingesetzt werden kann, ohne dass eine Verklebevorgang erfolgt; die elastische Dichtlippe gewährt im Zusammenwirken mit dem Anlageflansch eine einwandfreie Abdichtung der Trägeröffnung.

Erfindungsgemäß besteht darüber hinaus die Möglichkeit, dass die Eingriffselemente des Abdichtteils als über den Umfang des Verschlussdeckels verteilte, in Öffnungen des Deckelteils einlagerbare Stege ausgebildet sind. Alternativ ist eine Bauform möglich, bei welcher die Eingriffselemente des Abdichtteils Aussparungen sind, welche mit Vorsprüngen des Deckelteils verrastet werden können.

Eine besonders gute Abdichtmöglichkeit ergibt sich in weiterer Ausgestaltung der Erfindung dadurch, dass mehrere Dichtlippen am Außenumfang des Abdichtteils hintereinander angeordnet sind. Hierbei können die Dichtlippen die gleiche Höhe aufweisen und gegen den Anlageflansch gerichtet sein. Alternativ besteht die Möglichkeit, dass die Dichtlippen unterschiedliche Höhen aufweisen und von dem Anlageflansch weggerichtet sind.

In weiterer Ausgestaltung der Erfindung ist das Deckelteil als mit einer Zwischenwand versehener Hohlzylinder ausgebildet. Dieser Hohlzylinder kann in einem mit den Gegeneingriffselementen versehenen Stirnbereich einen Flansch aufweisen, in welchen der Anschlagflansch des Abdichtteils eingebettet werden kann. Hierbei kann das Deckelteil, dem Stirnbereich gegenüberliegen, über eine Begrenzungsschulter das Abdichtteil zumindest teilweise umschließen, wobei dafür Sorge zu tragen ist, dass die Begrenzungsschulter niedriger als die Höhe der elastischen Dichtlippen ist. Weiterhin kann die Begrenzungsschulter in weiterer Ausgestaltung der Erfindung aus mehreren, über den Umfang des Deckelteils verteilten Vorsprüngen bestehen.

Die Erfindung wird nachfolgend anhand von in der Zeichnung dargestellten Ausführungsbeispielen näher beschrieben. In der Zeichnung zeigen:
- Fig. 1: Einen Mittelschnitt durch einen erfindungsgemäßen Verschlussdeckel, wobei der untere Bereich schematisch in eine Öffnung einer Trägerplatte eingesetzt ist;
- Fig. 2: eine andere Ausführungsmöglichkeit der Erfindung nach Montage in einer Trägerplatte;
- Fig. 3: eine perspektivische Ansicht des Verschlussdeckels nach Fig. 1.

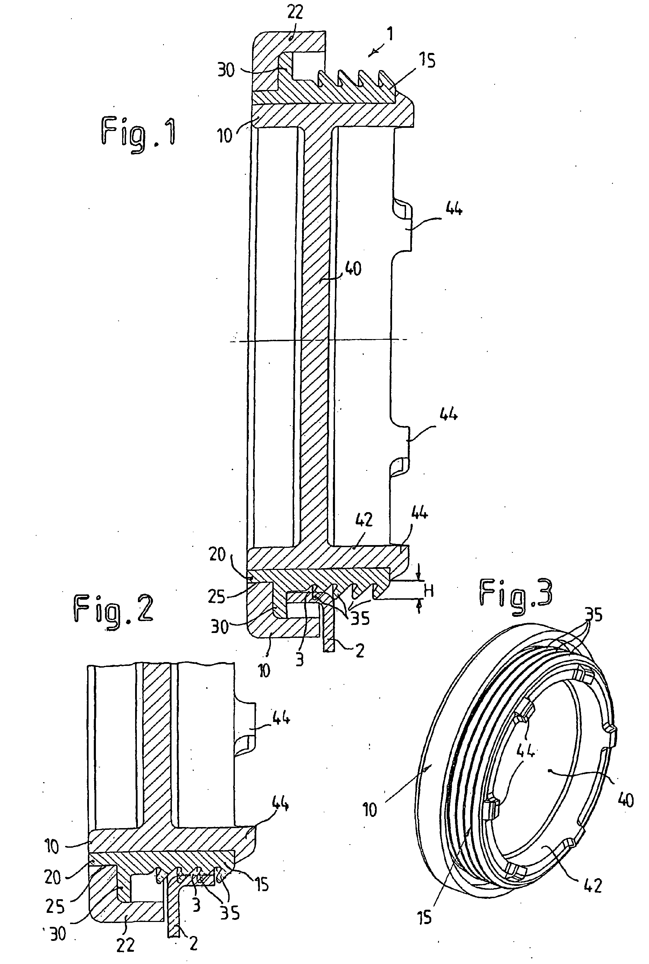

Der in Fig. 1 dargestellte Verschlussdeckel 1 besteht aus einem Deckelteil 10 und einem Abdichtteil 15. Das Deckelteil 10 ist aus einer Hartkomponente hergestellt, wohingegen das Abdichtteil aus einem elastischen Kunststoffmaterial besteht. Das Abdichtteil 15 weist Eingriffselement 20 auf, welche in Gegeneineingriffselemente 25 des Deckelteils eingelagert sind. Bei der vorliegenden Ausführungsform sind die Eingriffselemente 20 des Abdichtteils 15 als über den Umfang des Verschlussdeckels 1 verteilte Stege ausgebildet, welche in entsprechende Gegenöffnungen 25 des Deckelteils 10 einlagerbar sind.

Das Deckelteil ist als mit einer Zwischenwand 40 versehener Hohlzylinder 42 ausgebildet. Dieser Hohlzylinder 42 kann in einem, mit den über den Umfang verteilten Öffnungen 25 versehenen Stirnbereich einen Flansch 22 aufweisen. Auf der anderen Seite ist der Hohlzylinder mit mindestens einer Begrenzungsschulter 44 versehen, wobei diese Begrenzungsschulter 44 gemäß Fig. 1 und 3 aus mehreren, über den Umfang des Deckelteils 1 verteilten Vorsprüngen bestehen kann.

Das Abdichtteil 15 weist einen Anlageflansch 30 und - diesem im Abstand gegenüberliegend - mehrere elastische Dichtlippen 35 auf. Diese elastischen Dichtlippen können die gleiche Höhe H besitzen und gegen den Anlageflansch 30 gerichtet sein.

Der Flansch 22 des Deckelteils 1 bettet den Anlageflansch 30 des Abdichtteils 2 ein. Die Begrenzungsschulter 44 des Deckelteils 1 begrenzt den anderen Bereich des Abdichtteils 2 und umschließt diesen zumindest teilweise. Hierbei ist die Höhe der Begrenzungsschulter 44 bzw. der Vorsprünge niedriger als die Höhe H der elastischen Dichtlippen.

In Fig. 1 ist im unteren Bereich der Einbau des erfindungsgemäßen Verschlussdeckels in einer Öffnung 3 der Trägerplatte 2 dargestellt. Hierbei weist die Trägerplatte 2 einen umlaufenden Bund auf, welcher gegen den Anschlagflansch 30 gerichtet ist. Damit begrenzt der Anschlagflansch 30 des elastischen Abdichtteils 15 die Trägerplatte 2 bzw. die Öffnung 3, während sich die erste Dichtlippe 35 auf dem Außenumfang der Öffnung 3 der Trägerplatte 2 anlegt und die zweite Dichtlippe auf der oberen Fläche der Trägerplatte 2 liegt. Somit ist ein einwandfreier Abschluss einer Öffnung 3 der Trägerplatte 2 gewährleistet.

Bei der Ausführungsform nach Fig. 2 weist die Trägerplatte 2 einen umlaufenden Bund auf, welcher von dem Anlageflansch 30 des Abdichtteils 15 weggerichtet ist. Hier kommen die beispielsweise vier hintereinander liegenden Dichtlippen 35 des elastischen Abdichtteils 15 zur Geltung, wobei die mittleren Lippen die Öffnung 2 der Trägerplatte 3 verschließen und die außen liegenden Dichtlippen als Begrenzungselemente dienen.

Durch die Erfindung wird auf einfache Weise sichergestellt, dass beispielsweise ohne einen Klebevorgang schnell und effektiv ein dichter Abschluss einer Öffnung 3 in einer Trägerplatte 2 möglich ist, wobei diese Trägerplatte die unterschiedlichsten Konfigurationen aufweisen kann.

## Patentansprüche

1. Verschlussdeckel (1) aus Kunststoff, insbesondere zum dichten Verschließen einer Öffnung (3) in einer Trägerplatte (2), insbesondere einer Kraftfahrzeugkarosserie, mit einem Deckelteil (10) und einem Dichtteil (15),
wobei das aus einem elastischen Material bestehende Abdichtteil (15) über Eingriffselemente (20) mit Gegeneingriffselementen (25) des aus einer Hartkomponenten bestehenden Deckelteils (10) verbunden ist und das Abdichtteil (15) einen Anlageflansch (30) und diesem im Abstand gegenüberliegend mindestens eine elastische Dichtlippe (35) aufweist und
wobei das Deckelteil (1) als mit einer Zwischenwand (40) versehener Hohlzylinder (42) ausgebildet ist und der Hohlzylinder (42) in einem mit den Eingriffselementen (25) versehenen Stirnbereich einen Flansch (22) aufweist, in welchen der Anlageflansch (30) des Abdichtteils (2) eingebettet ist,
**dadurch gekennzeichnet,**
**dass** das Deckelteil (1) - dem Stirnbereich gegenüberliegend - über eine Begrenzungsschulter (44) das Abdichtteil (2) zumindest teilweise umschließt, wobei die Begrenzungsschulter (44) geringer als die Höhe (H) der elastischen Dichtlippen (35) ist.

2. Verschlussdeckel nach Anspruch 1, **dadurch gekennzeichnet, dass** die Begrenzungsschulter (44) aus mehreren, über den Umfang des Deckelteils (1) verteilten Vorsprüngen besteht.

3. Verschlussdeckel nach Anspruch 1, **dadurch gekennzeichnet, dass** die Eingriffselemente (20) des Abdichtteils (15) als über den Umfang des Verschlussdeckels (1) verteilte, in Öffnungen (25) des Deckelteils (10) einlagerbare Stege ausgebildet sind.

4. Verschlussdeckel nach einem oder mehreren der vorhergehenden Ansprüche, **dadurch gekennzeichnet, dass** mehrere Dichtlippen (35) am Außenumfang des Abdichtteils (2) hintereinander angeordnet sind.

5. Verschlussdeckel nach Anspruch 4, **dadurch gekennzeichnet, dass** die Dichtlippen (35) die gleiche Höhe (H) aufweisen und gegen den Anlageflansch (30) gerichtet sind.

6. Verschlussdeckel nach Anspruch 4, **dadurch gekennzeichnet, dass** die Dichtlippen unterschiedliche Höhen aufweisen und von dem Anlageflansch weg gerichtet sind.

## Claims

1. Closure cap (1) made of plastic, in particular for the sealed closing of an opening (3) in a support panel (2), in particular of a motor vehicle body, comprising a cap part (10) and a sealing part (15), in which arrangement the sealing part (15), which consists of an elastic material, is connected via engaging elements (20) to complementary engaging elements (25) of the cap part (10), which consists of a hard component, and the sealing part (15) has a bearing flange (30) and, situated opposite the latter at a distance therefrom, at least one elastic sealing lip (35), and in which arrangement the cap part (10) is designed as a hollow cylinder (42) provided with a partition wall (40) and, in a front region provided with the engaging elements (25), the hollow cylinder (42) comprises a flange (22) in which the bearing flange (30) of the sealing part (15) is embedded, **characterized in that**, opposite the front region, the cap part (10) at least partially encloses the sealing part (15) via a limiting shoulder (44), the limiting shoulder (44) being smaller than the height (H) of the elastic sealing lips (35).

2. Closure cap according to Claim 1, **characterized in that** the limiting shoulder (44) comprises a plurality of projections distributed over the periphery of the cap part (10).

3. Closure cap according to Claim 1, **characterized in that** the engaging elements (20) of the sealing part (15) are designed as fins which are distributed over the periphery of the closure cap (1) and can be mounted in openings (25) in the cap part (10).

4. Closure cap according to one or more of the preceding claims, **characterized in that** a plurality of sealing lips (35) are arranged behind one another on the outer periphery of the sealing part (15).

5. Closure cap according to Claim 4, **characterized in that** the sealing lips (35) have the same height (H) and are directed towards the bearing flange (30).

6. Closure cap according to Claim 4, **characterized in that** the sealing lips have different heights and are directed away from the bearing flange.

## Revendications

1. Bouchon d'obturation (1) en matière plastique, destiné en particulier à obturer de manière étanche une ouverture (3) dans une plaque de support (2), notamment une carrosserie de véhicule automobile, comprenant une partie de bouchon (10) et une partie d'étanchéité (15),
la partie d'étanchéité (15) constituée de matière élastique étant reliée par des éléments de mise en prise (20) à des éléments de contre-mise en prise (25) de la partie de bouchon (10) constitué d'un composant dur et la partie d'étanchéité (15) comprenant une bride d'appui (30) et au moins une lèvre d'étanchéité élastique (35) opposée à distance à celle-ci et
la partie de bouchon (1) étant conçue comme un cylindre creux (42) pourvu d'une paroi intermédiaire (40) et le cylindre creux (42) comprenant dans une zone frontale pourvue d'éléments de mise en prise (25) une bride (22), dans laquelle est encastrée la bride d'appui (30) de la partie d'étanchéité (2),
**caractérisé en ce que**
la partie de bouchon (1) -opposée à la zone frontale- entoure au moins en partie la partie d'étanchéité (2) par l'intermédiaire d'un épaulement de délimitation (44), l'épaulement de délimitation (44) étant inférieur à la hauteur (H) des lèvres d'étanchéité élastiques (35).

2. Bouchon d'obturation selon la revendication 1, **caractérisé en ce que** l'épaulement de délimitation (44) est constitué de plusieurs saillies réparties sur la périphérie du bouchon d'obturation (1).

3. Bouchon d'obturation selon la revendication 1, **caractérisé en ce que** les éléments de mise en prise (20) de la partie d'étanchéité (15) sont conçus comme des nervures réparties sur la périphérie du bouchon d'obturation (1), pouvant être intercalées dans des ouvertures (25) de la partie de bouchon (10).

4. Bouchon d'obturation selon l'une ou plusieurs des revendications précédentes, **caractérisé en ce que** plusieurs lèvres d'étanchéité (35) sont disposées les unes derrière les autres sur la périphérie extérieure de la partie d'étanchéité (2).

5. Bouchon d'obturation selon la revendication 4, **caractérisé en ce que** les lèvres d'étanchéité (35) présentent la même hauteur (H) et sont orientées vers la bride d'appui (30).

6. Bouchon d'obturation selon la revendication 4, **caractérisé en ce que** les lèvres d'étanchéité présentent différentes hauteurs et sont orientées à distance de la bride d'appui.
